# DEMANDE DE BREVET EUROPEEN

(11) **EP 2 829 385 A1**
(43) Date de publication de la demande: **28.01.2015**
(21) Numéro de dépôt: 14178242.5
(22) Date de dépôt: 23.07.2014
(51) Int. Cl.: B29C 65/60, B21J 5/10, F16B 19/06, F16B 5/04

(54) **Procédé de poinçonnage et de rivetage combiné**

(30) Priorité: 26.07.2013 FR 1357430
(71) Demandeur: COMPAGNIE PLASTIC OMNIUM, 69007 Lyon (FR)
(72) Inventeur: Tresse, David, 01390 Saint-André de Corcy (FR)
(74) Mandataire: Remy, Vincent Noel Paul

(57) **Abrégé**

Procédé d'assemblage d'au moins deux pièces (18a, 18b, 75) en matériaux composites véhicule automobiles. Ce procédé se caractérise par les étapes suivantes:
- superposition des pièces à assembler ;
- perforation simultanée des pièces superposées à l'aide d'un poinçon (22) ;
- insertion d'un rivet (26 ; 58) dans le trou (35 ; 59) traversant les pièces ;
- sertissage du rivet (26,58).

## Description

La présente invention concerne un procédé d'assemblage par rivetage de pièces en matériau composite de véhicule automobile, une machine de rivetage et les pièces ainsi obtenues.

Typiquement, une pièce en matériau composite comprend un renfort, comme par exemple de la fibre de verre et une matrice de résine thermoplastique ou thermodurcissable.

On entend par « pièce » une partie structurelle ou de carrosserie formant cloison rigide ou formant partie de la structure, comme par exemple une poutre de véhicule. L'invention peut également concerner une partie de carrosserie telle qu'un hayon arrière par exemple, ou encore une patte d'attache d'un composant intégré au véhicule.

On précise que l'objet de l'invention concerne des pièces en matériau composite qui ont une épaisseur, un périmètre de poinçonnage et une résistance au cisaillement nécessitant au moins une force de poinçonnage comprise entre 3kN et 100kN.

Dans l'état de la technique, un procédé d'assemblage permet d'assembler deux pièces en matériau composite en procédant par étapes successives de perçage par foret et de rivetage. Plus précisément, on procède de la manière suivante :
- on forme des paires de pièces en repérant les pièces avec un marquage;
- on superpose les deux pièces d'une paire ;
- on perce simultanément les deux pièces superposées à l'aide d'un foret pour former des trous traversant les deux pièces ;
- on sépare les deux pièces pour les nettoyer ;
- on assemble à nouveau les pièces d'une même paire ;
- on met en regard les trous traversants correspondants des deux pièces ;
- on pose des rivets dans les trous traversants au moyen d'une machine semi-automatique ou manuelle.

Une difficulté particulière qui se pose dans ce procédé connu est liée à l'étape de perçage des pièces, qui, d'une part, engendre une potentielle dégradation des pièces à l'endroit du perçage, susceptible d'affaiblir l'assemblage, et d'autre part, génère de la poussière et des copeaux. Aussi, est-il nécessaire d'éliminer cette poussière et ces copeaux par un nettoyage minutieux des pièces, en les séparant, afin notamment de ne pas polluer les étapes suivantes de mise en oeuvre de l'ensemble et les équipements correspondants, par exemple pour réaliser la finition (peinture), de l'assemblage (ajout de composants), de l'intégration sur véhicule.

Un autre problème de ce procédé d'assemblage est le caractère chronophage de l'exécution des différentes étapes sus-mentionnées, en particulier, lorsque plusieurs rivets doivent être posés pour l'assemblage de deux pièces en composite.

De plus, comme les étapes de gestion de l'apparaige, de marquage, de perçage, de nettoyage et de rivetage sont distinctes les unes des autres, elles nécessitent d'être réalisées au moyen de dispositifs différents, à savoir une perceuse, une riveteuse et par exemple un aspirateur pour le nettoyage, et en des lieux différents, ce qui augmente globalement les coûts d'infrastructure pour ces opérations.

L'invention a pour but de remédier aux inconvénients précités en fournissant un procédé d'assemblage ne générant pas de poussière ni de copeau, tout en diminuant le temps de mise en oeuvre.

A cet effet, l'invention a pour objet un procédé d'assemblage d'au moins deux pièces en matériau composite pour véhicule automobile, caractérisé en ce qu'il comporte les étapes suivantes :
- superposition des pièces à assembler ;
- perforation simultanée des pièces superposées à l'aide d'un poinçon ;
- insertion d'un rivet dans le trou traversant les pièces ;
- sertissage du rivet.

Ainsi, on propose un procédé d'assemblage qui permet de réaliser des pièces rivetées sans génération de poussière ni de copeaux, avec l'avantage d'être bien plus rapide à mettre en oeuvre, puisque les pièces restent dans leur position superposée tout au long du procédé, et en un endroit unique qui peut être réduit. En d'autres termes, cela permet de conserver en continu le référentiel géométrique depuis l'appairage initial jusqu'à l'assemblage définitif. Avantageusement, ce procédé permet l'obtention de pièces assemblées qui sont directement compatibles, c'est-à-dire sans nettoyage, avec les étapes suivantes de mise en oeuvre comme l'étape de peinture, d'ajout de composants ou d'intégration sur véhicule.

Un autre avantage de ce procédé est qu'il permet de fabriquer des assemblages plus solides dans la mesure où l'on évite une étape de perçage qui peut être source d'amorces de fissures dans les bords des parties percées.

L'invention peut en outre comporter l'une ou plusieurs des caractéristiques suivantes, prises seules ou en combinaison.
- les pièces superposées sont maintenues ensemble par un organe de maintien ;
- les pièces demeurent superposées et gardent une même position relative tout au long du procédé ;
- l'organe de maintien est localisé proche du trou traversant, de préférence autour du trou ;
- le rivet traverse l'organe de maintien lequel organe demeure globallement dans la même position entre la perforation et l'insertion du rivet ;
- l'organe de maintien est aussi un dévêtisseur pour le poinçon ;
- le fût du rivet sert de poinçon pour la perforation simultanée des pièces superposées ;
- l'organe de maintien des pièces comporte une surface d'appui qui, pendant les opérations de perforation et de sertissage, coopère avec une surface d'une des pièces à assembler, ladite surface d'appui étant définie par une aire d'appui (A) dont la racine carrée est au moins trois fois supérieure à l'épaisseur totale (e) des pièces à poinçonner ;
- l'organe de maintien applique une force qui est au moins égale à 20 % de l'effort de poinçonnage ;
- la force appliquée sur le poinçon lors de l'étape de perforation est supérieure ou égale à 3kN, de préférence supérieure ou égale à 5kN, et encore de préférence supérieure ou égale à 10kN ;
- le sertissage du rivet est effectué par écrasement du rivet.

L'invention a également pour objet un dispositif de rivetage caractérisé en ce qu'il est adapté pour la mise en oeuvre du procédé décrit précédemment. Un tel dispositif peut comporter l'une ou plusieurs des caractéristiques suivantes, prises seules ou en combinaison ;
- le dispositif comprend une matrice mobile munie d'une chambre de matriçage ;
- le dispositif comporte un tas de rivetage, la chambre de matriçage définissant une direction de poinçonnage et la matrice mobile étant montée déplaçable à la direction de poinçonnage ;
- la chambre de matriçage forme un corps creux adapté pour accueillir un éjecteur, ledit éjecteur étant de préférence monté sur un moyen de rappel ;
- l'éjecteur est monté mobile entre une position d'éjection et une position de sertissage, la position d'éjection étant atteinte lorsqu'une face de l'éjecteur affleure à une face de plaquage de la matrice mobile de telle sorte que l'éjecteur et la matrice mobile forment ensemble une face d'appui pour le poinçonnage des pièces à assembler, la position de sertissage étant atteinte lorsque la surface de l'éjecteur n'affleure plus à la face de plaquage de la matrice mobile et se trouve à l'intérieur de la chambre de matriçage ;
- la position d'éjection est atteinte lorsque la position d'éjection et la position de sertissage sont séparées par un écart au moins égal à l'épaisseur des pièces à assembler.

L'invention a encore pour objet un assemblage de pièces **caractérisé en ce qu**'il est réalisé à partir du procédé selon l'invention.

Avantageusement, une des pièces formant l'assemblage peut être remplacée par une pièce en polymère ou en métal.

L'invention sera mieux comprise à la lecture des figures annexées, qui sont fournies à titre d'exemples et ne présentent aucun caractère limitatif, dans lesquelles :
- la figure 1 est une représentation schématique en coupe d'un dispositif d'assemblage dans une position de repos, comportant des pièces à assembler et permettant la mise en oeuvre du procédé selon l'invention.
- la figure 2 est une représentation du dispositif de la figure 1 lors d'une étape de poinçonnage réalisée au moyen du dispositif de la figure 1.
- la figure 3 est une représentation du dispositif de la figure 1 lors d'une étape intermédiaire de remontée du poinçon.
- la figure 4 est une représentation du dispositif de la figure 1 lors d'une étape de positionnement d'un rivet dans un trou traversant des pièces à assembler.
- la figure 5 est une représentation du dispositif de la figure 1 lors de l'étape de rivetage.
- la figure 6 est une représentation du dispositif de la figure 1 lors d'une étape d'éjection de chutes de matière issue du poinçonnage.
- les figures 7 et 8 sont des représentations en coupe de rivets utilisés pour le procédé selon le deuxième mode de réalisation selon l'invention.
- les figures 9 à 14 sont des représentations schématiques en coupe d'un dispositif pour la mise en oeuvre d'un second mode de réalisation du procédé selon l'invention.

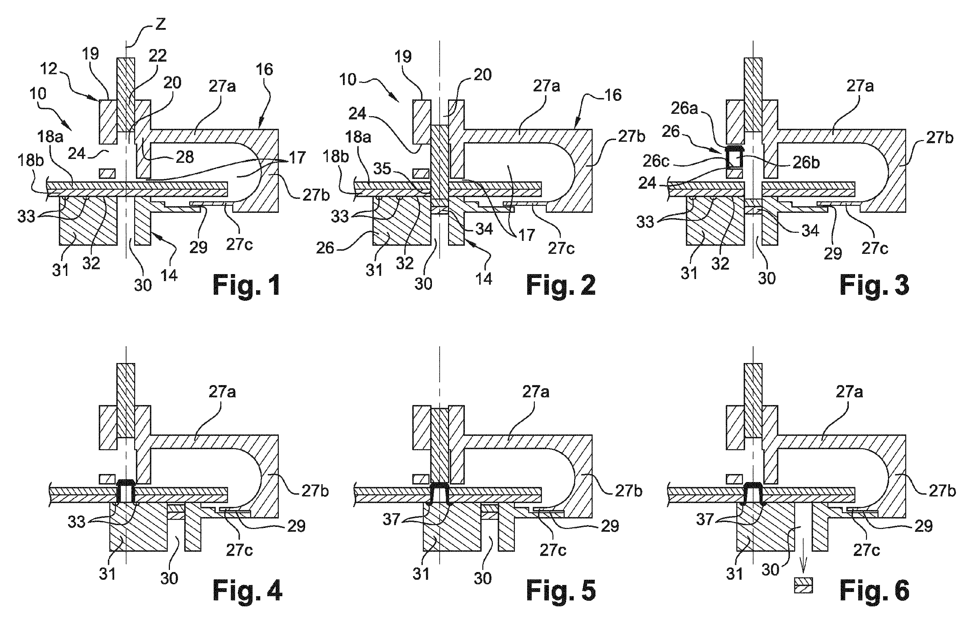

En référence à la figure 1, on a représenté un dispositif d'assemblage 10 selon un mode de réalisation permettant de mettre en oeuvre le procédé selon l'invention.

Le dispositif d'assemblage 10 comprend une partie 12 de poinçonnage, une matrice 14 mobile et un organe 16 en forme de C, appelé dans la suite de la description « col de cygne » 16. La partie 12 de poinçonnage, la matrice 14 mobile et le col de cygne 16, définissent entre eux un espace 17 de positionnement destiné à accueillir une paire de pièces 18a, 18b en matériau composite, en vue de leur assemblage.

La partie 12 de poinçonnage comporte un organe 19 tubulaire muni de parois interne et externe cylindriques, la paroi interne formant chambre 20 de guidage d'un poinçon 22 cylindrique. Une lumière 24 ménagée dans l'organe 19 tubulaire est adaptée pour le passage d'un rivet 26 vers la chambre 20 de guidage du poinçon 22. Le poinçon 22 est monté coulissant dans la chambre de guidage selon un axe Z.

Le rivet 26 utilisé pour la mise en oeuvre du procédé selon ce premier mode de réalisation comporte, de manière classique, une première tête qui est adaptée pour venir en appui sur une surface d'une 18a des pièces à assembler, ainsi qu'une extrémité distale destinée à être déformée et à former, au cours d'une étape ultérieure de sertissage, un bourrelet qui sera en appui sur une surface de l'autre 18b pièce à assembler. Le rivet comporte ainsi une tête 26a et un fût 26b muni d'une extrémité distale 26c.

La partie 12 de poinçonnage est reliée à la matrice 14 mobile au moyen du « col de cygne » 16, lequel forme globalement une armature en forme de « C » munie d'un montant supérieur 27a, d'un montant latéral 27b, et d'un montant inférieur 27c. Le « col de cygne » 16 est fixé par le montant supérieur 27a à la partie 12 de poinçonnage par une liaison fixe comme par exemple une soudure 28. Concernant le montant inférieur 27c du « col de cygne » 16, celui-ci est fixé à la matrice 14 mobile par un moyen 29 de translation latérale selon un axe perpendiculaire à l'axe de la chambre 20 de guidage du poinçon 22. Un tel moyen 29 de translation latérale est réalisé par une rainure coopérant avec une encoche de guidage selon une liaison glissière.

La matrice 14 mobile comporte un tas 31 de rivetage et une chambre 30 de matriçage cylindrique. Ladite chambre 30 de matriçage définit une direction de poinçonnage. La matrice 14 mobile, c'est-à-dire le tas 31 et la chambre 30, est montée déplaçable perpendiculairement à la direction de poinçonnage. La chambre 30 de matriçage est adaptée pour pouvoir être alignée coaxialement avec la chambre 20 de guidage de la partie 12 de poinçonnage.

Le tas 31 de rivetage comporte une face 32 plane supérieure qui est conformée pour servir d'appui plan pour la paire de pièces 18a, 18b à assembler. Toutefois, la face 32 pourrait ne pas être plane, et avoir une forme adaptée selon le rivet qui est utilisé.

La face 32 plane supérieure du tas 31 de rivetage est munie d'une empreinte 33 en forme de gorge annulaire. Cette empreinte 33 est conformée pour faciliter la formation d'un bourrelet sur le rivet 26 lors de l'étape de sertissage.

On va maintenant décrire un procédé d'assemblage de pièces selon un premier mode de réalisation de l'invention et à l'aide du dispositif d'assemblage décrit précédemment.

Le procédé d'assemblage comprend tout d'abord une étape de superposition des deux pièces 18a, 18b à assembler, au cours de laquelle les pièces sont maintenues ensemble de préférence par un collage préalable et/ou par un organe de maintien global, tel que des serre-joints (non-représentés). Ensuite, comme on le voit sur la figure 1, les pièces ainsi maintenues superposées sont insérées dans l'espace 17 de positionnement, une des pièces 18b étant en appui sur le tas 31 de rivetage de la matrice 14 mobile. Au cours de cette étape, les deux chambres 20, 30 de guidage et de matriçage sont alignées coaxialement selon l'axe Z.

On a représenté à la figure 2 l'étape suivante qui correspond à une étape de perforation simultanée des deux pièces 18a, 18b superposées à l'aide du poinçon 22. Pour cela, un vérin (non-représenté) pousse le porte-poinçon et le poinçon 22 jusqu'à une position basse, c'est-à-dire jusqu'à l'embouchure de la partie haute de la chambre de matriçage 30 de guidage de la matrice 14. Ceci a pour effet de perforer les pièces superposées et de générer des chutes 34 de matière correspondant à un trou 35 réalisé par le poinçon 22. Ces chutes 34 se trouvent ainsi déplacées vers le bas selon l'axe Z, dans la chambre de guidage de la matrice 14 mobile. La force appliquée par le vérin sur le poinçon lors de l'étape de perforation est supérieure ou égale à 3 kN.

On précise qu'au cours de l'étape de perforation, l'organe 19 tubulaire de poinçonnage n'entre pas en contact avec les pièces à assembler, et se situe à une distance d'environ 0,1 mm à 1 mm de la surface des pièces à assembler. Cette distance faible entre l'organe tubulaire et les pièces à assembler améliore la qualité du poinçonnage tout en permettant un positionnement aisé des pièces qui peuvent parfois présenter des dispersions d'épaisseur.

Comme représenté à la figure 3, le procédé comprend une étape de remontée du poinçon 22 dans la chambre 20 de guidage de la partie 12 de poinçonnage. Pendant cette étape, le rivet 26 est agencé dans une position d'attente dans la lumière 24.

La figure 4 montre l'étape d'insertion du rivet 26 dans le trou 35 traversant les deux pièces 18a, 18b. Dans le même temps, la matrice 14 mobile translate latéralement par le biais du moyen 29 de translation qui la relie au montant inférieur 27c du col de cygne 16. Cette translation latérale a pour effet de disposer l'empreinte 33 en gorge annulaire au droit du trou 35, c'est-à-dire de manière alignée avec l'axe Z.

La figure 5 représente l'étape de sertissage du rivet 26 au cours de laquelle le poinçon 22 descend à nouveau dans la chambre 20 de guidage et vient sertir le rivet 26. Au cours de cette étape, le rivet 26 est écrasé de telle sorte que l'extrémité distale 26c du rivet se déforme plastiquement et vient remplir et épouser l'empreinte 33 du tas 31 de rivetage, ce qui a pour effet de former le bourrelet 37.

Successivement à cette étape de sertissage, on voit sur la figure 6 une nouvelle étape de remontée du poinçon 22 en position haute ainsi qu'une expulsion des chutes 34 de matière générées lors de la perforation. À la suite de cela, la matrice 14 mobile translate de manière à repositionner les deux chambres 20, 30 de guidage et de matriçage de manière coaxiale selon l'axe Z. Le dispositif d'assemblage 10 est ainsi prêt à effectuer à nouveau la première étape du procédé d'assemblage qui vient d'être décrit.

En variante du premier mode de réalisation présentement décrit, l'organe 12 tubulaire de poinçonnage peut comporter un organe de maintien en forme de bague (non représenté), lequel est situé de préférence autour du trou traversant les pièces à assembler. Cet organe de maintien est destiné à produire une immobilisation locale autour du trou 35 pour obtenir un meilleur placage des pièces entre elles contre le tas 31 de rivetage sur lequel elles sont en appui.

Un tel organe de maintien comporte une surface d'appui qui, pendant les opérations de perforation et de sertissage, coopère avec une surface supérieure d'une des pièces 18a à assembler, ladite surface d'appui étant définie par une aire d'appui (A) dont la racine carrée est au moins trois fois supérieure à l'épaisseur totale (e) des pièces à poinçonner. L'organe de maintien applique une force sur la surface de la pièce sur laquelle il est en appui qui est au moins égal à 20 % de l'effort de poinçonnage.

Dans le cas où l'on utilise un tel organe de maintien, on comprend qu'au cours de l'étape de sertissage, le rivet 26 traverse ledit organe de maintien, tandis que l'organe demeure globalement dans la même position entre la perforation et l'insertion du rivet 26.

Une telle immobilisation à proximité du trou 35 peut éventuellement autoriser à se passer de l'étape initiale de maintien global des deux pièces 18a, 18b à assembler qui est normalement requise et souvent réalisée par collage et/ou à l'aide de serre-joints.

Par ailleurs, cet organe de maintien peut également servir de dévêtisseur pour le poinçon, ce qui permet de faciliter la remontée du poinçon dans la chambre de guidage de la partie de poinçonnage. Un dévêtisseur est un outillage généralement rencontré dans les presses et qui a pour fonction d'extraire ou de faciliter l'extraction d'un poinçon de la bande de la pièce dans laquelle il a pénétré.

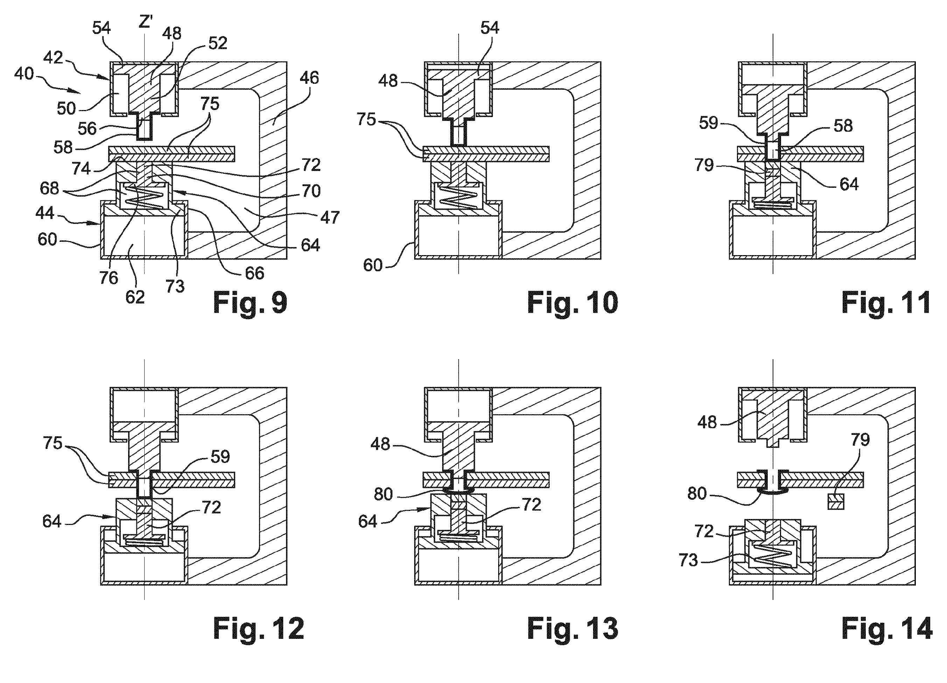

En référence aux figures 9 à 14, on va maintenant décrire, un second mode de réalisation de l'invention.

Sur la figure 9, on voit un dispositif 40 de rivetage permettant de mettre en oeuvre le procédé d'assemblage selon le deuxième mode de réalisation. Ce dispositif 40 comporte une partie 42 de poinçonnage, une partie 44 de matriçage et un col de cygne 46.

La partie 42 de poinçonnage comporte un porte-poinçon 48 coulissant selon un axe Z' à l'intérieur d'une chambre 50 de poinçonnage. Plus précisément, le porte-poinçon 48 est muni d'un corps 52 cylindrique surmonté d'une tête 54 destinée à permettre l'application, par exemple d'une pression hydraulique au moyen d'un vérin (non représenté), engendrant une force de compression nécessaire pour le poinçonnage. Le corps 52 cylindrique du porte-poinçon 48 comporte un embout 56 de retenue d'un rivet 58, ledit embout étant orienté en direction de la partie 44 de matriçage.

La partie 44 de matriçage comprend un socle 60 formant chambre 62 pour le déplacement d'une matrice 64 mobile en forme de piston. L'ensemble formé par la chambre 62 et la matrice 64 mobile forme un vérin.

La matrice 64 mobile est munie d'une tête 66 et d'un corps 68 creux formant chambre 70 de matriçage cylindrique et adapté pour accueillir un éjecteur 72 monté sur un moyen 73 de rappel tel qu'un ressort. La matrice 64 mobile comporte une face 74 de plaquage qui est conformée pour permettre le positionnement et la venue en appui de pièces 75 à assembler.

Le corps 68 creux comporte donc la chambre 70 de matriçage, débouchant sur la face 74 de plaquage et dans laquelle coulisse une portion cylindrique de l'éjecteur 72.

Ainsi, l'éjecteur 72 est monté mobile entre une position d'éjection (figures 9, 10, 14) et une position de sertissage (figures 11, 12, 13), la position d'éjection étant atteinte lorsque l'éjecteur affleure à la face 74 de plaquage de la matrice 64 mobile, l'éjecteur 72 et la matrice 64 mobile formant ensemble une surface d'appui pour le poinçonnage des pièces à assembler. La position de sertissage est atteinte lorsque l'éjecteur 72 n'affleure plus à la face 74 de plaquage de la matrice mobile, qu'il se trouve en retrait dans la chambre 70 de matriçage, et que sa tête 76 se trouve en butée au bas du corps 68 creux.

Ainsi, dans ce mode de réalisation, la position de sertissage est définie comme étant la position dans laquelle l'éjecteur 72 se trouve en retrait dans la chambre 70 de matriçage à une distance supérieure ou égale à l'épaisseur des pièces à assembler. Ainsi, une face des chutes 79 forme avec la face 74 une surface dont la relative planéité permet d'obtenir un bourrelet 80 de forme optimisée lors de l'étape de sertissage du rivet. Il n'est cependant pas nécessaire que la course de l'éjecteur soit exactement égale à l'épaisseur des pièces à assembler.

En ce qui concerne le col de cygne 46, celui-ci comprend un montant supérieur qui est fixé rigidement à la partie 42 de poinçonnage et un montant inférieur qui est fixé rigidement à la partie 44 de matriçage, les deux montants étant reliés entre eux par un montant vertical.

La partie 42 de poinçonnage, la partie 44 de matriçage et le col de cygne 46 délimitent entre eux un espace 47 de positionnement.

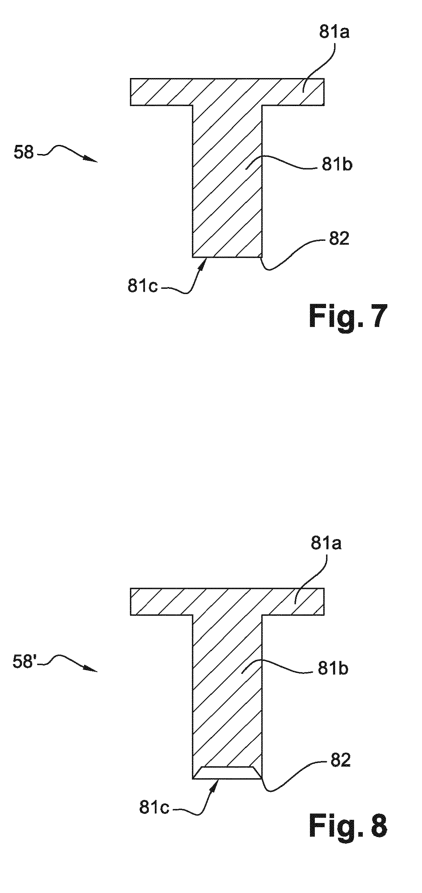

En référence à la figure 7, on a représenté un premier exemple d'un rivet 58 utilisé dans le procédé selon le deuxième mode de réalisation. Ce rivet comporte une tête 81 a, un fût 81 b et une extrémité 81 c distale qui présente une arête 82 formant un angle droit.

Sur la figure 8, un deuxième exemple de rivet 58' comportant une arrête 82' formant un bord tranchant est représenté.

De telles arrêtes 82, 82' assurent un cisaillement optimal lors de la perforation des pièces par le rivet 58, 58'.

On va maintenant décrire le procédé d'assemblage de pièces selon le deuxième mode de réalisation de l'invention, mis en oeuvre à l'aide du dispositif 40 d'assemblage qui vient d'être décrit.

Le procédé d'assemblage comporte tout d'abord une étape de superposition et de maintien des pièces à assembler. Les pièces ainsi superposées sont ensuite positionnées dans l'espace 47, comme on le voit sur la figure 9. La matrice 64 mobile est maintenue en position haute à l'intérieur du socle 60.

Ensuite, en référence aux figures 10 et 11, on procède à une étape de perforation au cours de laquelle le porte-poinçon 48 descend dans la chambre de poinçonnage en direction des pièces 75 à assembler. Le rivet 58 perfore les deux pièces, ce qui a pour effet de générer un trou 59 et de faire pénétrer le rivet 58 dans les pièces superposées et maintenues ensemble. Une telle opération est donc aussi une étape de poinçonnage de la matière des deux pièces 75 par le rivet 58. Autrement dit, le fût 81 b du rivet 58 sert ici de poinçon.

Comme montré sur la figure 11, la pénétration du rivet 58 dans lesdites pièces 75 à assembler provoque la génération de chutes 79 de matière pendant le poinçonnage des pièces 75. En fait, au cours de cette étape, la force qui est appliquée par l'intermédiaire du rivet 58 sur les pièces 75 superposées est supérieure à la force de rappel du ressort 73 de sorte que la matière des pièces superposées qui se trouve au droit de la chambre 70 de matriçage est découpée par cisaillement. Ainsi, lorsque le rivet 58 descend, les chutes 79 qui sont générées par cisaillement descendent à l'intérieur de la chambre 70 de matriçage en repoussant l'éjecteur 72 vers le bas. Lorsque la tête 76 de l'éjecteur 72 arrive en butée au bas du corps 68 creux, le fût 81 b du rivet 58 est partiellement logé à l'intérieur du trou 59.

Comme montré sur la figure 12, l'étape suivante consiste à faire descendre le porte-poinçon 48 plus bas dans la chambre 50 de poinçonnage jusqu'à ce que la tête 81 a du rivet vienne au contact de la surface supérieure de la pièce 75 du dessus. Dans le même temps, la matrice 64 descend à l'intérieur de la partie 44 de matriçage. Ainsi, le déplacement vers le bas du porte-poinçon 48 est une étape qui permet d'assurer le bon positionnement du rivet 58 pour l'étape de sertissage qui suit. Cela permet que la tête 81 a du rivet se trouve en appui sur la surface supérieure de la pièce 75 du dessus, alors que le fût 81 b du rivet est sorti au maximum par rapport à la surface de la pièce 75 qui fait face à la matrice 64.

En référence à la figure 13, on procède à l'étape de sertissage du rivet 58, qui consiste à générer un bourrelet 80 à l'extrémité 81 c distale du rivet 58. Pour cela, le porte-poinçon 48 demeure dans sa position de fin de course, tandis que la matrice 64 mobile remonte en direction du porte-poinçon 48. L'éjecteur 72, qui est en butée dans le corps 68 creux, soutient les chutes 79 et transmet l'effort de compression engendré par la matrice 64 auxdites chutes 79, lesquelles transmettent ledit effort de compression à l'extrémité 81 c distale du rivet. Contrairement à l'étape de poinçonnage, la matière des chutes 79 n'est plus soumise à un cisaillement, de sorte qu'elle ne se laisse plus pénétrer par le rivet 58.

On comprend donc que les chutes 79 et la face 74 servent ici de bouterolle de rivetage, puisque lorsque l'effort de compression est appliqué, les chutes 79 résistent à cet effort et transmettent au rivet 58 un effort suffisamment important pour le sertir. Ceci est remarquable de par le fait que l'effort qui est appliqué ici pour le sertissage est plus important que l'effort qui a été appliqué lors de l'étape de poinçonnage. Ainsi les chutes 79 repoussent la matière du rivet 58 qui est serti contre la surface de la pièce 75 qui était précédemment en contact avec la face 74 de plaquage de la matrice mobile.

En fait, un avantage de ce dispositif réside dans le fait que les chutes 79 permettent de boucher la chambre de poinçonnage pour former une continuité de matière avec la face 74. Cette manière de procéder permet également de gagner du temps en comparaison avec un procédé dans lequel il faudrait, dans une étape intermédiaire, éjecter les chutes 79 avant l'étape de sertissage.

Enfin, dans une dernière étape présentée à la figure 14, le porte-poinçon 48 remonte dans la chambre 50 de poinçonnage. Le rivet se libère de l'embout 56 de retenue du porte-poinçon 48. La matrice 64 mobile prend une position basse à l'intérieur du socle 60, ce qui a pour effet de permettre la remontée de l'éjecteur 72 dans la chambre 70 de matriçage sous l'effet du moyen 73 de rappel. Les chutes 79 de matière issues du trou 59 sont alors éjectées tandis que les pièces 75 assemblées sont retirées de l'espace 47 de positionnement.

L'invention n'est pas limitée aux modes de réalisation présentés ci-avant et d'autres modes de réalisation apparaîtront clairement à l'homme du métier. Il est notamment possible d'assembler plus de deux pièces simultanément, ou bien même de remplacer l'une des pièces en matériau composite par une pièce en polymère ou en métal. Par ailleurs, les parois interne et externe de l'organe 19 tubulaire pourraient avoir d'autres formes que cylindrique.

## Revendications

1. Procédé d'assemblage d'au moins deux pièces (18a, 18b; 75) en matériau composite pour véhicule automobile, **caractérisé en ce qu**'il comporte les étapes suivantes :
- superposition des pièces (18a, 18b ; 75) à assembler ;
- perforation simultanée des pièces (18a, 18b; 75) superposées à l'aide d'un poinçon (22) ;
- insertion d'un rivet (26, 58) dans le trou (35 ; 59) traversant les pièces (18a, 18b ; 75) ;
- sertissage du rivet (26 ; 58).

2. Procédé d'assemblage selon la revendication précédente dans lequel les pièces (18a, 18b ; 75) demeurent superposées et gardent une même position relative tout au long du procédé.

3. Procédé selon la revendication 1 ou 2, dans lequel les pièces (18a, 18b ; 75) superposées sont maintenues ensemble par un organe de maintien.

4. Procédé selon la revendication précédente, dans lequel l'organe de maintien est localisé proche du trou (35) traversant, de préférence autour du trou (35).

5. Procédé selon l'une des revendications 3 et 4, dans lequel l'organe de maintien est aussi un dévêtisseur pour le poinçon (22).

6. Procédé selon l'une quelconque des revendications précédentes, dans lequel le fût (81 b) du rivet (58 ; 58') sert de poinçon pour la perforation simultanée des pièces (75) superposées.

7. Procédé selon la revendication précédente, dans lequel au moins une chute (79) de matière issue du poinçonnage est utilisée comme une bouterolle de rivetage.

8. Procédé selon l'une quelconque des revendications précédentes, dans lequel la force appliquée sur le poinçon (22) lors de l'étape de perforation est supérieure ou égale à 3kN, de préférence supérieure ou égale à 5kN, et encore de préférence supérieure ou égale à 10kN.

9. Procédé selon l'une quelconque des revendications précédentes, dans lequel le sertissage du rivet (26 ; 58) est effectué par écrasement du rivet (26 ; 58).

10. Dispositif (10 ; 40) d'assemblage **caractérisé en ce qu**'il est adapté pour la mise en oeuvre du procédé selon l'une quelconque des revendications précédentes.

11. Dispositif d'assemblage selon la revendication 11 comprenant une matrice (14 ; 64) mobile munie d'une chambre (30 ; 70) de matriçage.

12. Dispositif (10) d'assemblage selon la revendication 11 ou 12 muni d'un tas (31) de rivetage, la chambre (30) de matriçage définissant une direction de poinçonnage et la (14) matrice étant montée déplaçable à la direction de poinçonnage.

13. Dispositif (40) d'assemblage selon la revendication 11 ou 12, la chambre (70) de matriçage formant un corps (68) creux adapté pour accueillir un éjecteur (72), ledit éjecteur (72) étant de préférence monté sur un moyen (73) de rappel.

14. Dispositif d'assemblage selon la revendication 14, dans lequel l'éjecteur (72) est monté mobile entre une position d'éjection et une position de sertissage, la position d'éjection étant atteinte lorsque l'éjecteur (72) affleure à une face (74) de plaquage de la matrice (64) de telle sorte que l'éjecteur (72) et la matrice (64) forment ensemble une surface d'appui pour le poinçonnage des pièces (75) à assembler, la position de sertissage étant atteinte lorsque l'éjecteur (72) n'affleure plus à la face (74) de plaquage de la matrice (64) et se trouve à l'intérieur de la chambre (70) de matriçage.

15. Dispositif d'assemblage selon la revendication 14 dans lequel la position d'éjection est atteinte lorsque la position d'éjection et la position de sertissage sont séparées par une distance au moins égale à l'épaisseur des pièces (75) à assembler.

16. Assemblage de pièces (18a, 18b ; 75) **caractérisé en ce qu**'il est réalisé par la mise en oeuvre du procédé selon l'une quelconque des revendications 1 à 9.

17. Assemblage de pièces (18a, 18b ; 75) selon la revendication 17 dans lequel l'une des pièces en matériau composite est remplacée par une pièce en polymère ou en métal.
